# EUROPÄISCHE PATENTANMELDUNG

(11) **EP 2 348 618 A2**
(43) Veröffentlichungstag der Anmeldung: **27.07.2011**
(21) Anmeldenummer: 10195587.0
(22) Anmeldetag: 17.12.2010
(51) Int. Cl.: H02K 11/00

(54) **Aktuator**

(30) Priorität: 26.01.2010 DE 102010005854
(71) Anmelder: Pierburg GmbH, 41460 Neuss (DE)
(72) Erfinder: Nowak, Martin, 51379, Leverkusen (DE); Lappan, Rolf, 50733, Köln (DE); Voigtländer, Karsten, 40625, Düsseldorf (DE); Vierkötter, Michael, 53840, Troisdorf (DE)
(74) Vertreter: Patentanwälte ter Smitten

(57) **Zusammenfassung**

Bekannte Aktuatoren weisen Schwächen bei der Detektierung der Rotorposition beziehungsweise der Position des Abtriebsgliedes auf oder sind sehr aufwendig in der Montage.

Um diese Probleme zu vermeiden wird ein Aktuator mit einem elektronisch kommutierten Elektromotor (2), einer Getriebeeinheit (6), welche über den Elektromotor (2) antreibbar ist, einem ersten berührungslosen Sensor (46), der die Drehlage eines Rotors (26) des Elektromotors (2) zur Kommutierung des Elektromotors (2) detektiert und einem zweiten berührungslosen Sensor (84) der die Drehlage eines Abtriebsgliedes (70) der Getriebeeinheit (6) detektiert, vorgeschlagen, bei dem der zweite berührungslose Sensor (84) zur Erfassung der Drehlage des Antriebsgliedes (70) über eine flexible Leiterbahnfolie (92) mit einer Platine (40) verbunden ist, die an einem zum Sensor (84) axial gegenüberliegenden Ende (10) des Elektromotors (2) angeordnet ist und an der der erste Sensor (46) befestigt ist.

## Beschreibung

Die Erfindung betrifft einen Aktuator mit einem elektronisch kommutierten Elektromotor, einer Getriebeeinheit, welche über den Elektromotor antreibbar ist, einem ersten berührungslosen Sensor, der die Drehlage eines Rotors des Elektromotors zur Kommutierung des Elektromotors detektiert, einem zweiten berührungslosen Sensor der die Drehlage eines Abtriebsgliedes der Getriebeeinheit detektiert.

Derartige elektromotorische Aktuatoren werden beispielsweise zum Antrieb von Klappen oder Ventilen an einem Verbrennungsmotor eingesetzt. In den vergangenen Jahren wurden häufig Bürstenmotoren zum Antrieb verwendet, welche jedoch zusehends von elektronisch kommutierten Motoren abgelöst werden, da die Bürstenmotoren aufgrund des mechanischen Stromwenders einem Verschleiß des Kommutierungsapparates, erhöhter Geräuschbildung, Anlaufschwierigkeiten durch Korrosion der Kommutatorlamellen sowie Hochfrequenzstörungen unterliegen. Entsprechend weisen elektronisch kommutierte Motoren eine höhere Lebensdauer, eine gute Dynamik und Regelbarkeit über den gesamten Drehzahlbereich sowie ein hohes Anlaufmoment auf. Allerdings ist zur Nutzung dieser Vorteile eine zuverlässige Drehlagerückmeldung des Rotors zur Sicherstellung einer korrekten Kommutierung insbesondere beim Anlauf des Elektromotors erforderlich.

Hierzu werden berührungslose Sensoren verwendet, die häufig gleichzeitig als Drehlagesensoren für die Ausgangswelle des Motors und somit für nachfolgende angetriebene Teile dienen. Es hat sich jedoch gezeigt, dass eine solche Lagerückmeldung für viele Anwendungsfälle zu ungenau ist, insbesondere wenn nachfolgende Getriebe angeschlossen sind, deren Zahnräder zumeist in ihrer Drehlage zueinander ein gewisses Spiel aufweisen. Des Weiteren ist eine Kontrolle eines defekten Zahnrades nicht möglich.

Um dieses Problem zu beseitigen, wird in der EP 1 489 735 A2 ein Aktuator vorgeschlagen, bei dem zwei getrennte Sensoren genutzt werden, wobei der erste die Drehlage des Rotors des Elektromotors zur korrekten elektronischen Kommutierung detektiert und der zweite Sensor die Lage der als Drehachse dienenden Ausgangswelle des Getriebes, auf der ein Antriebszahnrad angeordnet ist, detektiert, um eine korrekte Lagerückmeldung sicherzustellen.

Es ergibt sich allerdings bei der beschriebenen Ausführung das Problem, dass die Welle des Rotors als Hohlwelle ausgeführt ist, durch welche die Welle des Abtriebszahnrades hindurchgeführt werden muss. Entsprechend sind zwei getrennte Lagerungen an den jeweiligen axialen Enden des Elektromotors zur Lagerung der beiden Wellen notwendig. Des Weiteren ist es notwendig, die beiden Magnetfelder der auf den Wellen angeordneten Permanentmagneten gegeneinander abzuschirmen, wodurch erneut zusätzlicher Montageaufwand entsteht und zusätzlicher Bauraum benötigt wird. Bei nicht ausreichender Abschirmung bleiben die Messwerte der Drehlage ungenau.

Es ist daher Aufgabe der Erfindung, einen elektromotorisch angetriebenen Aktuator bereitzustellen, der exakte Messwerte für die Detektion der Drehlage des Rotors und der Drehlage des letzten Getriebeteils sicherstellt. Dabei soll der Aufbau und die Montage des Aktuators im Vergleich zu bekannten Ausführungen dennoch deutlich vereinfacht werden.

Diese Aufgabe wird durch einen Aktuator mit den Merkmalen des kennzeichnenden Teils des Hauptanspruchs gelöst.

Erfindungsgemäß ist der zweite berührungslosen Sensor zur Erfassung der Drehlage des Abtriebsgliedes über eine flexible Leiterbahnfolie mit einer Platine verbunden, die an einem zum zweiten Sensor axial gegenüberliegenden Ende des Elektromotors angeordnet ist und an der der erste Sensor befestigt ist. So wird es möglich, den ersten Sensor zur Drehfageerfassung des Rotors direkt auf der Steuerplatine anzuordnen, welche an der zur Montage günstigen Rückseite des Elektromotors angeordnet ist. Der Magnet zur Lageerkennung des Abtriebsgliedes kann im Getriebegehäuse direkt gegenüberliegend zum Abtriebsglied oder der Abtriebswelle angeordnet werden, so dass eine Beeinflussung der Magnetfelder weitestgehend ausgeschlossen ist. Die Kontaktierung des zweiten Sensors zur Steuerplatine ist dennoch durch die flexible Leiterbahnfolie auf einfache Weise durchzuführen, so dass ein einzelner Steckanschluss bei einer Anbindung an ein Motorsteuergerät genutzt werden kann.

Vorzugsweise weist das Abtriebsglied eine Drehachse auf, auf der ein Permanentmagnet befestigt ist, der mit dem zweiten Sensor zusammenwirkt. So kann ein einzelner diametral magnetisierter Permanentmagnet verwendet werden, der lagegenau zum Sensor ausgerichtet ist. Dieser kann sich dann auch auf der Rotationsachse des Elektromotors befinden, so dass keine sich durch Drehung des Elektromotors sich ändernden magnetischen Feldlinien auf den Sensor wirken. Hierdurch entsteht ein exaktes Drehwinkelsignal.

In einer bevorzugten Ausführung ist der erste Sensor auf einer Rückseite der Platine angeordnet, wodurch die Montage des Sensors vor dem Einbau der Platine im Motorgehäuse erfolgen kann. Zusätzlich befindet sich der Sensor auf diese Weise direkt gegenüberliegend zur Rotorwelle, wodurch wiederum eine exakte Messung der Signale ermöglicht wird.

Weiterhin ist es vorteilhaft, wenn der zweite Sensor und weitere elektronische Bauteile zur Erfassung der Drehlage des Abtriebsgliedes auf der Leiterbahnfolie befestigt sind. So müssen keine zusätzlichen elektrischen Kontaktierungen vorgenommen werden.

Alternativ hierzu können der zweite Sensor und weitere elektronische Bauteile zur Erfassung der Drehlage des Antriebsgliedes auf einer zweiten Platine befestigt sein, die mit der Leiterbahnfolie verbunden ist. Hier ist eine kleine Platine ausreichend, die problemlos im Getriebegehäuse angeordnet und befestigt werden kann. Diese kann auch bei auftretenden Fehlern unabhängig von der Leiterbahnfolie ausgetauscht oder überprüft werden.

Vorzugsweise ist der zweite Sensor mit den weiteren elektronischen Bauteilen in einem Halteelement befestigt. Dies kann sowohl direkt im Halteelement erfolgen als auch über die Platine. Die Form eines solchen Halteelementes kann an eine entsprechende Aufnahme im Gehäuse angepasst werden, wodurch die folgenden Montage vereinfacht wird. Das Halteelement dient gleichzeitig als Schutz für die elektronischen Bauteile.

Zur weiteren Vereinfachung der Montage nimmt ein Führungselement die Leiterbahnfolie zumindest teilweise auf. So kann die Folie über das Führungselement durch einen entsprechend ausgebildeten Kanal geschoben werden, ohne dass ein Umknicken der Folie zu befürchten ist. Die Montage wird so deutlich vereinfacht.

Vorzugsweise ist das Führungselement in einem Kanal eines Motorgehäuses oder eines Stators des Elektromotors angeordnet, der vom ersten axialen Ende des Elektromotors zum zweiten axialen Ende des Elektromotors führt. Ein solcher durchgehender Kanal kann entsprechend zum Führungselement ausgeformt werden und dient der Montagevereinfachung, da die Führung der Folie im Elektromotor hierdurch festgelegt ist.

In einer weiterführenden Ausführung ist das Halteelement im eingebauten Zustand um 90° zum Führungselement geklappt angeordnet, wobei das Führungselement und das Halteelement in einer Ebene drehbar zueinander aneinander befestigt sind. Das Führungselement kann beispielsweise über ein Filmscharnier am Halteelement befestigt werden. So können das Führungselement und das Halteelement bei der Montage gemeinsam durch den Kanal geschoben werden. Bei diesem Hindurchschieben befinden sie sich in einer gemeinsamen Ebene. Nach dem Hindurchschieben des Halteelementes kann dieses um 90° zum Führungselement gedreht beziehungsweise geknickt werden und in diesem Zustand in eine entsprechende Ausnehmung des Getriebegehäuses geschoben werden. Das Führungselement verbleibt dabei im Bereich des Statorumfangs. Entsprechend vereinfacht sich die Montage.

Ein weiterer Vorteil ergibt sich, wenn das Halteelement ein Halteteil und ein Deckelteil aufweist, die in einer Ebene drehbar zueinander aneinander befestigt sind, wobei durch Drehen des Deckelteils auf das Halteteil der zweite Sensor mit den elektronischen Bauteilen am Halteelement befestigt ist. So können das Führungselement mit dem Halteteil und dem Deckelteil einstückig hergestellt werden, wobei durch Klappen die Lage der Teile zueinander zum Befestigen veränderbar ist. Dies erleichtert die Herstellung.

Vorzugsweise ist das Halteelement in eine korrespondierende Öffnung eines Getriebegehäuses der Getriebeeinheit eingeschoben, wodurch die Lage des Sensors zum Permanentmagneten festgelegt wird. Ein falscher Einbau wird ausgeschlossen. Eine Befestigung erfolgt durch reines Schieben, ohne weitere Befestigungselemente verwenden zu müssen.

Es wird somit ein Aktuator geschaffen, bei dem die Drehlagen des Rotors und eines nachfolgenden Abtriebsgliedes sehr genau detektiert werden können, wodurch die Ansteuerung des Elektromotors zum Erhalt einer korrekten Drehlage der Abtriebswelle optimiert werden kann. Gleichzeitig ist dieser Aktuator einfach zu montieren und herzustellen, so dass die Produktionskosten sinken.

Ein Ausführungsbeispiel ist in den Zeichnungen dargestellt und wird nachfolgend beschrieben:
Figur 1 zeigt eine Seitenansicht eines erfindungsgemäßen Aktuators in geschnittener Darstellung.
Figur 2 zeigt eine Steuerplatine mit weiteren Anbauteilen des erfindungsgemäßen Aktuators gemäß der Figur 1 in einem ersten Montageschritt in dreidimensionaler Darstellung.
Figur 3 zeigt die Steuerplatine mit weiteren Anbauteilen des erfindungsgemäßen Aktuators gemäß der Figur 1 in einem zweiten Montageschritt in dreidimensionaler Darstellung.
Figur 4 zeigt die Steuerplatine mit weiteren Anbauteilen des erfindungsgemäßen Aktuators gemäß der Figur 1 in einem dritten Montageschritt beim Einbau in das Motorgehäuse in dreidimensionaler Darstellung.
Figur 5 zeigt die Steuerplatine mit weiteren Anbauteilen des erfindungsgemäßen Aktuators gemäß der Figur 1 in einem vierten Montageschritt beim Einbau in das Getriebegehäuse in dreidimensionaler Darstellung.

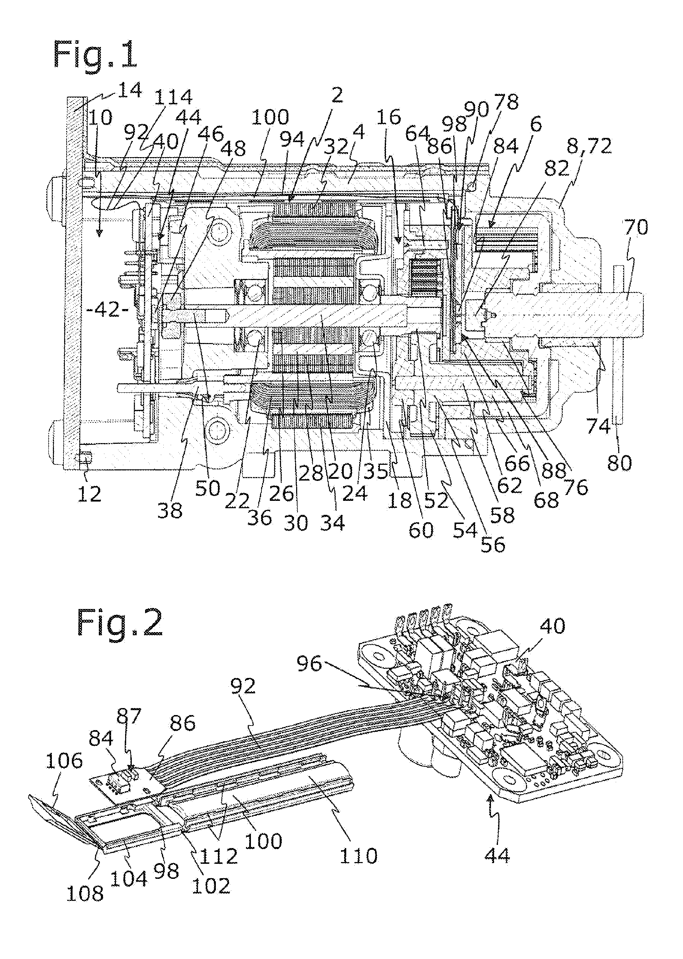

Der in Figur 1 dargestellte erfindungsgemäße Aktuator besteht aus einem elektronisch kommutierten Elektromotor 2, der in einem Motorgehäuse 4 angeordnet ist sowie einer über den Elektromotor 2 angetriebenen Getriebeeinheit 6, welche in einem Getriebegehäuse 8 angeordnet ist.

Das Motorgehäuse 4 umgibt den Elektromotor 2 im Wesentlichen über seinen Umfang und wird an seinem ersten axialen Ende 10 unter Zwischenlage einer Dichtung 12 von einem Deckelteil 14 verschlossen und an seinem gegenüberliegenden zweiten axialen Ende 16 von einer Endkappe 18, durch die eine Antriebswelle 20 des Elektromotors 2 in die Getriebeeinheit 6 ragt.

Diese Abtriebswelle 20 ist im Motorgehäuse 4 sowie in der Endkappe 18 über zwei Kugellager 22, 24 drehbar gelagert. Auf der Welle 20 ist ein Rotor 26 des Elektromotors 2 angeordnet, in dessen Rotorpaket 28 Magnete 30 befestigt sind und der mit einem Stator 32 zusammenwirkt, der aus einem Statorpaket 34 besteht, auf welchem Spulenträger 35 mit darauf gewickelten Spulen 36 angeordnet sind.

Durch korrekte Abfolge einer Bestromung der Spulen 36 kann der Rotor 26 und damit die Welle 20 des Elektromotors 2 in bekannter Weise in Drehung versetzt werden. Zur möglichen Bestromung der Spulen 36 sind diese über Motorkontakte 38 verbunden, die durch den Spulenträger 35 zu einer ersten Platine 40 führen, die am ersten axialen Ende 10 des Elektromotors 2 senkrecht zur Motorachse in einem Elektronikraum 42 angeordnet ist, der durch den Deckelteil 14 verschlossen wird.

Diese Platine 40 ist mit den notwendigen elektronischen Bausteinen zur Ansteuerung des elektronisch kommutierten Elektromotors 2 bestückt und dient somit als Motorsteuereinheit. Auf einer Rückseite 44 der Platine 40, die im eingebauten Zustand zum Elektromotor 2 zeigt, sind weitere elektronische Bausteine sowie ein berührungsloser Sensor 46 angeordnet, der mit einem Permanentmagneten 48 zusammenwirkt, der auf einem mit der Antriebswelle 20 verbundenen Magnetträger 50 angeordnet ist und sich somit mit der Antriebswelle 20 dreht. Somit wird es möglich, in bekannter Weise die genaue Position des Rotors 26 zum Stator 32 zu detektieren, was zur korrekten Kommutierung des Elektromotors 2 genutzt wird.

Auf dem entgegengesetzten und in die Getriebeeinheit 6 hineinragenden Ende der Antriebswelle 20 ist ein Antriebszahnrad 52 angeordnet, welches mit dem jeweils größeren Zahnrad 54 von mehreren über den Umfang verteilten und als Planentenräder eines Planetengetriebes dienenden Doppelzahnrädern 56 kämmt. Die Doppelzahnräder 56 sind jeweils auf einer Achse 58 gelagert, die an ihrem ersten Ende an einem ersten Gehäuseteil 60 des Getriebegehäuses 8 befestigt ist und an ihrem zweiten Ende an einem zweiten Gehäuseteil 62 befestigt ist, welches wiederum über Schrauben 64 am ersten Gehäuseteil 60 beim Zusammenbau der Getriebeeinheit 6 befestigt wird.

Jeweils kleinere Zahnräder 66 der Doppelzahnräder 56 stehen in Eingriff mit einem Hohlrad 68, welches wiederum auf einer als Abtriebsglied 70 dienenden Drehachse befestigt ist, die in einem Getriebegehäusedeckel 72 über ein Gleitlager 74 und im zweiten Gehäuseteil 62 über ein Gleitlager 76 gelagert ist. Der Getriebegehäusedeckel 72 ist unter Zwischenlage eines Dichtrings 78 mit dem den Elektromotor 2 umgebenden Teil des Motorgehäuses 4 verbunden.

Die als Abtriebsglied 70 dienende Drehachse weist an ihrem nach außen weisenden Ende einen Hebel 80 auf, über den beispielsweise eine nachfolgende Klappe gedreht werden kann. Am gegenüberliegenden axialen Ende der Drehachse ist ein Permanentmagnet 82 befestigt, der mit einem zweiten berührungslosen Sensor 84 zusammenwirkt, der auf einer zweiten Platine 86 angeordnet ist, auf der noch weitere elektronische Bauteile 87 zur Drehlageerkennung angeordnet sind, über die die Signale des Sensors 84 verarbeitet werden.

Die Platine 86 ist in einer Aufnahme 88 zwischen dem ersten Gehäuseteil 60 und dem zweiten Gehäuseteil 62 des Getriebegehäuses 8 angeordnet, in welche die Platine 86 derart über eine korrespondierende Öffnung 90 einschiebbar ist, dass der Sensor 84 exakt gegenüberliegend zum Permanentmagneten 82 angeordnet ist.

Die elektrische Kontaktierung der zweiten Platine 86 zur ersten Platine 40, in welcher die Signale der zweiten Platine 86 zur Erzeugung eines Steuersignals für den Elektromotor 2 verarbeitet werden, erfolgt über eine flexible Leiterbahnfolie 92, die von der ersten Platine 40 durch einen Kanal 94 im Motorgehäuse 4, der vom Elektronikraum 42 zum entgegengesetzten axialen Ende des Elektromotors 2 führt. Dort tritt die Leiterbahnfolie 92 aus dem Kanal 94 aus und führt in die Aufnahme 88 zur im rechten Winkel zum Kanal 94 angeordneten zweiten Platine 86.

Über den zweiten Sensor 84 und den Magneten 82 kann somit die Drehlage des Antriebsgliedes 70 direkt detektiert werden. Auch bei vorhandenem Spiel im Getriebe wird lediglich die Stellung des Antriebsgliedes detektiert. Das entstehende Signal kann über die Leiterbahnfolie 92 zur Platine 40 beziehungsweise zur Motorsteuereinheit übertragen werden. Bei Änderung der gewünschten Position wird mittels des ersten Sensors 46 ein korrektes Signal zur Kommutierung des Elektromotors 2 erzeugt, der entsprechend in gewünschter Richtung dreht bis das Ausgangssignal des zweiten Sensors 84 der anzufahrenden Position entspricht. Somit ist bei korrekter Lageerkennung des Antriebsgliedes dennoch eine optimale Kommutierung sichergestellt.

Zusätzlich ergibt sich aus der beschriebenen Anordnung eine besonders leichte Montage, wie im Folgenden anhand der Figuren 2 bis 5 beschrieben wird.

In Figur 2 ist die als Motorsteuereinheit dienende erste Platine 40 dargestellt. Sie weist über Kontaktelemente 96 eine Verbindung zur Leiterbahnfolie 92 auf. Zu verbesserten Montage werden zusätzlich ein Halteelement 98 und ein Führungselement 100 verwendet, die in vorliegender Ausführung durch ein Filmscharnier 102 derart miteinander verbunden sind, dass sie in einer Ebene zueinander verdrehbar sind. Das Halteelement 98 besteht aus einem Halteteil 104 und einem Deckelteil 106, welche ebenfalls über ein Filmscharnier 108 miteinander verbunden sind und in der gleichen Ebene wie das Halteelement 98 und das Führungselement 100 zueinander drehbar sind.

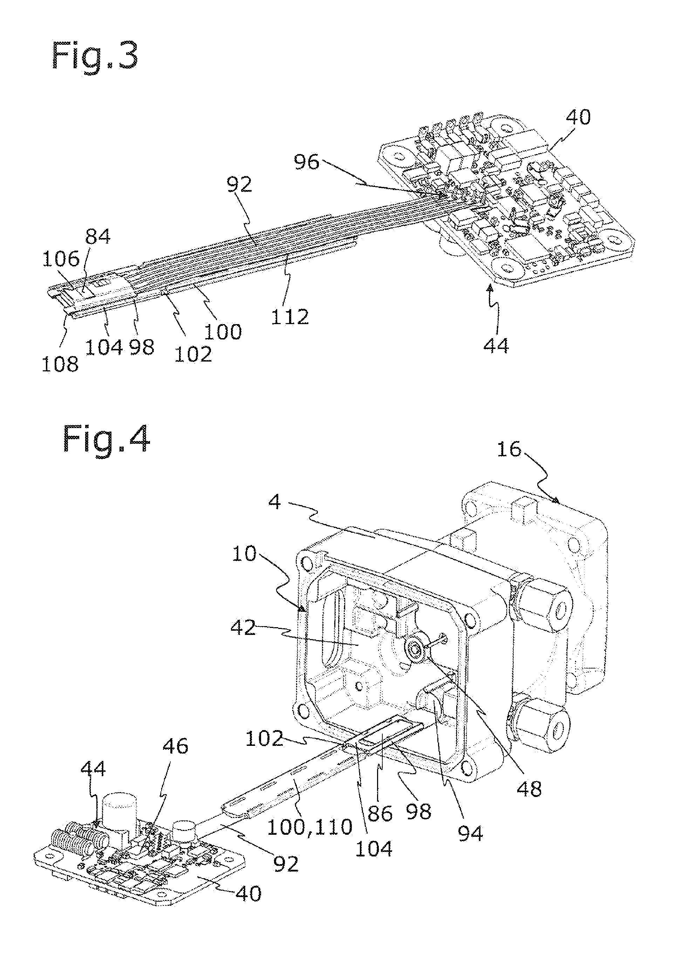

Die Figur 3 zeigt die Anordnung der Bauteile in einem folgenden Montageschritt. Die Leiterbahnfolie 92 liegt auf einer Trägerplatte 110 des Führungselementes 100 auf, wo sie unter einzelne Vorsprünge 112 des Führungselementes geklemmt wird, wodurch die Leiterbahnfolie 92 verschiebbar am Führungselement 100 befestigt ist. Die zweite Platine 86 liegt auf dem Halteteil 104 des Halteelementes 98 auf. Das Deckelteil 106 ist um 180° um das Filmscharnier 108 zum Halteteil 104 gedreht worden, so dass das Deckelteil 106 auf dem Halteteil 104 unter Zwischenlage der Platine 86 aufliegt. Am Halteteil 104 und am Deckelteil 106 sind entsprechende nicht näher dargestellte Verbindungselemente ausgeführt, die ein ungewolltes Lösen verhindern.

Im folgenden Montageschritt wird die Leiterbahnfolie 92 mit dem Halteteil 104 vorweg vom ersten axialen Ende 10 in den Kanal 94 des Motorgehäuses 4 geschoben, wie in Figur 4 dargestellt ist. Dies erfolgt bis die erste Platine 40 im Elektronikraum 42 liegt, dort um 90° zum Führungselement 100, welches nun im Kanal 94 angeordnet ist, gedreht wird und im Elektronikraum 42 befestigt wird.

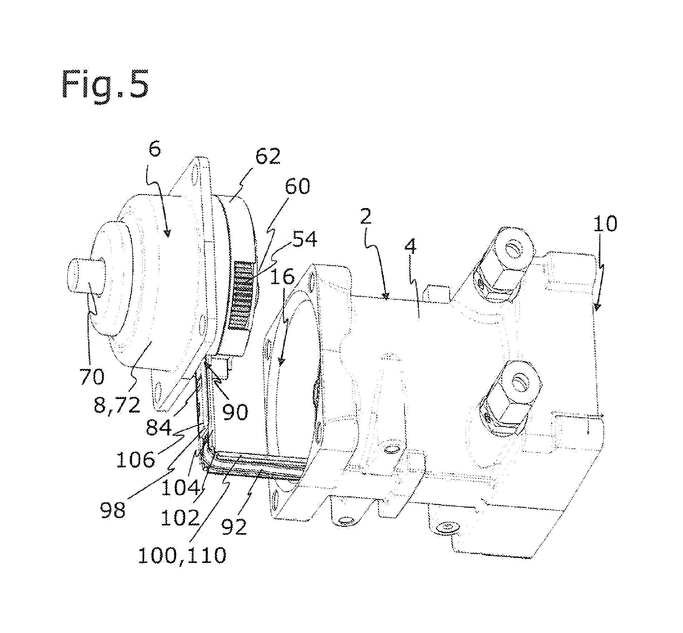

In dieser Stellung ragt das Halteelement 98 bereits am entgegengesetzten zweiten axialen Ende 16 aus dem Motorgehäuse 8 heraus, wie in Figur 5 zu erkennen ist. Die Leiterbahnfolie 92 kann nun ein wenig weiter aus dem Kanal 94 herausgezogen werden. Das Filmscharnier 102 wird geknickt, so dass sich das Halteelement 98 senkrecht zum Führungselement erstreckt. Daraufhin wird das Halteelement durch die korrespondierende Öffnung 90 in die Aufnahme 88 des vormontierten Getriebegehäuses 8 geschoben. Dieses wird anschließend axial auf das Motorgehäuse 4 aufgesetzt, wodurch das Führungselement 100 im Kanal 94 wieder etwas in Richtung zum Elektronikraum 42 zurückgeschoben wird, was durch die Flexibilität der Leiterbahnfolie 92 ermöglicht wird. Entsprechend befindet sich nach dem Zusammenbau eine kleine Schleife 114 im Elektronikraum, wie in Figur 1 zu erkennen ist.

Es sollte deutlich sein, dass die beschriebene Montage der Elektronik sehr einfach ist, da vormontierte Einheiten zusammengesetzt werden können. Dennoch befinden sich die Stellungssensoren direkt gegenüberliegend zu den zu detektierenden Teilen des Aktuators. So wird eine genaue Positionierung und Messung der Drehlagen bei vereinfachter Montage verwirklicht.

Selbstverständlich sind innerhalb des Schutzbereiches des Hauptanspruchs verschiedene konstruktive Änderungen denkbar. So kann beispielsweise der Kanal zur Aufnahme der Leiterbahnfolie im Stator ausgebildet werden. Auch kann die Detektion der Rotorlage gegebenenfalls bei entsprechender Anordnung des ersten Sensors über die Magnetfelder des Rotors erfolgen. Andere Getriebeformen sind ebenso denkbar wie die direkte Anordnung des zweiten Sensors sowie der weiteren elektronischen Bauteile direkt auf der Leiterbahnfolie.

## Patentansprüche

1. Aktuator mit
einem elektronisch kommutierten Elektromotor,
einer Getriebeeinheit, welche über den Elektromotor antreibbar ist, einem ersten berührungslosen Sensor, der die Drehlagen eines Rotors des Elektromotors zur Kommutierung des Elektromotors detektiert, einem zweiten berührungslosen Sensor der die Drehlage eines Antriebsgliedes der Getriebeeinheit detektiert,
**dadurch gekennzeichnet, dass**
der zweite berührungslose Sensor (84) zur Erfassung der Drehlage des Abtriebsgliedes (70) über eine flexible Leiterbahnfolie (92) mit einer Platine (40) verbunden ist, die an einem zum Sensor (84) axial gegenüberliegenden Ende (10) des Elektromotors (2) angeordnet ist und an der der erste Sensor (46) befestigt ist.

2. Aktuator nach Anspruch 1,
**dadurch gekennzeichnet, dass**
das Abtriebsglied (70) eine Drehachse aufweist, auf der ein Permanentmagnet (82) befestigt ist, der mit dem zweiten Sensor (84) zusammenwirkt.

3. Aktuator nach einem der Ansprüche 1 oder 2,
**dadurch gekennzeichnet, dass**
der erste Sensor (46) auf einer Rückseite (44) der Platine (40) angeordnet ist.

4. Aktuator nach einem der vorhergehenden Ansprüche,
**dadurch gekennzeichnet, dass**
der zweite Sensor (84) und weitere elektronische Bauteile (87) zur Erfassung der Drehlage des Abtriebsgliedes (70) direkt auf der Leiterbahnfolie (92) befestigt sind.

5. Aktuator nach einem der Ansprüche 1 bis 3,
**dadurch gekennzeichnet, dass**
der zweite Sensor (84) und die weiteren elektronischen Bauteile (87) zur Erfassung der Drehlage des Abtriebsgliedes (70) auf einer zweiten Platine (86) befestigt sind, die mit der Leiterbahnfolie (92) verbunden ist.

6. Aktuator nach einem der Ansprüche 4 oder 5,
**dadurch gekennzeichnet, dass**
der zweite Sensor (84) mit den weiteren elektronischen Bauteilen (87) in einem Halteelement (98) befestigt ist.

7. Aktuator nach einem der vorhergehenden Ansprüche,
**dadurch gekennzeichnet, dass**
ein Führungselement (100) die Leiterbahnfolie (92) zumindest teilweise aufnimmt.

8. Aktuator nach Anspruch 7,
**dadurch gekennzeichnet, dass**
das Führungselement (100) in einem Kanal (94) eines Motorgehäuses (4) oder eines Stators (32) des Elektromotors (2) angeordnet ist, der vom ersten axialen Ende (10) des Elektromotors (2) zum zweiten axialen Ende (16) des Elektromotors (2) führt.

9. Aktuator nach einem der Ansprüche 7 oder 8,
**dadurch gekennzeichnet, dass**
das Halteelement (98) im eingebauten Zustand um 90° zum Führungselement (100) geklappt angeordnet ist, wobei das Führungselement (100) und das Halteelement (98) in einer Ebene drehbar zueinander aneinander befestigt sind.

10. Aktuator nach einem der Ansprüche 6 bis 9,
**dadurch gekennzeichnet, dass**
das Halteelement (98) ein Halteteil (104) und ein Deckelteil (106) aufweist, die in einer Ebene drehbar zueinander aneinander befestigt sind, wobei durch Drehen des Deckelteils (106) auf das Halteteil (104) der zweite Sensor (84) mit den elektronischen Bauteilen (87) am Halteelement (98) befestigt ist.

11. Aktuator nach einem der Ansprüche 6 bis 10,
**dadurch gekennzeichnet, dass**
das Halteelement (98) in eine korrespondierende Öffnung (90) eines Getriebegehäuses (8) der Getriebeeinheit (6) eingeschoben ist.
